# EUROPEAN PATENT SPECIFICATION

(11) **EP 0 713 278 B1**
(45) Date of publication and mention of the grant of the patent: **03.03.1999**
(21) Application number: 95118064.5
(22) Date of filing: 16.11.1995
(51) Int. Cl.: H02G 3/08, H02G 15/013, H02G 15/113, H01R 13/56

(54) **Structure for holding bushing of cord**
Struktur zur Festhaltung einer Kabeldurchführung
Structure pour maintenir étanche l'entrée d'un câble

(30) Priority: 17.11.1994 JP 308273/94
(43) Date of publication of application: 22.05.1996
(73) Proprietor: Mitsumi Electric Company Ltd., Chofu-shi Tokyo (JP)
(72) Inventor: Kodama, Shigenobu, c/o Mitsumi Electric Co., Ltd, Chofu-shi, Tokyo (JP); Nakai, Katsunori, c/o Mitsumi Electric Co., Ltd, Chofu-shi, Tokyo (JP); Kimura, Yoshio, c/o Mitsumi Electric Co., Ltd, Chofu-shi, Tokyo (JP)
(74) Representative: Grünecker, Kinkeldey, Stockmair & Schwanhäusser Anwaltssozietät

(56) References cited:
- EP-A- 0 375 669
- DE-U- 1 888 656
- US-A- 4 449 015
- US-A- 4 818 822
- US-A- 5 295 859

## Description

The invention relates to a structure for holding a bushing of a cord, with the features cited in the preamble of claim 1.

A structure of this type is disclosed in US-A-5,295,859, describing an electric connector with a multicore cable which is fixed in a housing. Near the terminal end of the multicore cable, a clamper body is wrapped around the cable and two wing-like portions laterally project therefrom. The wing-like portions 23 may be fixed between retaining grooves 11 from the upper case and the lower case of the housing. The sheathed cable lead out between the wing-like portions and have to be fixed in a contact holder having an axis perpendicular to the axis of the resilience lever. The extra clamper body is needed in order to ensure sufficient fixation of the multicore cable in the housing.

EP-A-0 375 669 discloses a simplex fiberoptic cable carrier which is provided with a strain relief at the entry of the end cable in a housing consisting of an upper case and a lower case. The strain relief is connected to a cylindrical sleeve which fits in a corresponding cylindrical sleeve portion of the housing. An angular flange is arranged adjacent to the cylindrical sleeve and fits in the recess provided adjacent to the sleeve of the housing. A free cylindrical end portion is provided on the opposite side of the flange and wrapped around the optical fiber.

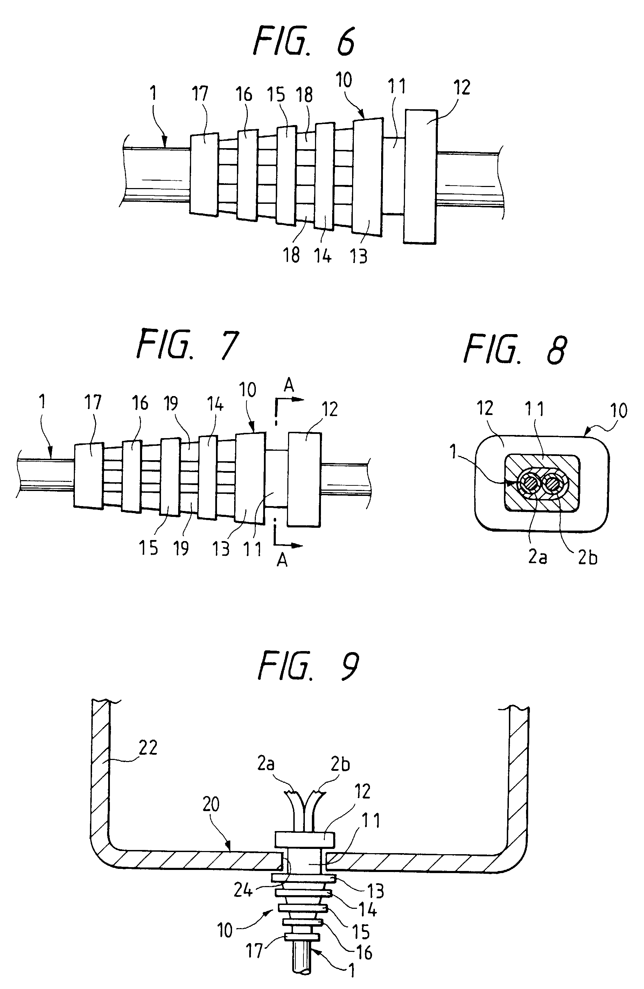

According to another prior art, a bushing 10 made of synthetic resin is arranged in the vicinity of a terminal of a power supply cord as shown in Figs. 6, 7, and 8. The bushing 10 is integrally fixed to a cord 1 while fitted over the terminal of the power supply cord 1 from outside, the terminal of the cord 1 being of elongated circle in cross-section and being formed by sheathing with resin two sheathed electric wires 2a, 2b. A rectangular sleeve portion 11 is arranged on the side of the terminal of the cord. A rectangular collarlike portion 12 is projected from the outer periphery of a rear end portion (on the side of the terminal of the cord) of the rectangular sleeve portion 11. A rectangular collarlike porion 13 that is smaller than the collarlike portion 12 is arranged on the front end portion of the rectangular sleeve portion 11.

Further, not only platelike coupling portions 18, 19 are arranged in the front of the collarlike portion 13, but also rectangular collarlike portions 14, 15, 16, and 17 are sequentially arranged at a predetermined interval continuously from the platelike coupling portions 18, 19, the outer shapes of the collarlike portions 14, 15, 16, and 17 becoming smaller as they move away from the collarlike portion 13.

The power supply cord 1 having the thus constructed bushing 10 has the terminal portion thereof connected to various types of electronic devices such as ac-dc converters and controllers. In that case, the bushing 10 is usually held in such a mode as shown in Fig. 9.

That is, a rectangular notch 24 is formed in a case 20 (the lower case 22 thereof) that is splittable into the upper case and the lower case, the notch 24 being engageable with the rectangular sleeve portion 11 of the bushing 10. The rectangular sleeve portion 11 is engaged with the notch 24, and the upper opening of the notch 24 is closed by putting the upper case over the lower case 22, so that the coming out or falling of the bushing 10 from the case 20 can be prevented.

Since the rectangular sleeve portion 11 is merely engaged with the notch 24 in the aforementioned conventional bushing,holding structure, the bushing 10 is easy to move and therefore unstable when the cord 1 is, e.g., pushed and pulled back and forth or oscillated vertically as well as horizontally. In other words, the bushing 10 and the bushing holding section are not adequately durable.

It is the object of the invention to provide an improved structure for holding a bushing of a cord which is designed to hold the bushing and the cord in a stable manner by regulating the movement thereof, even when the cord is, e.g., pushed and pulled back and forth or oscillated vertically as well as horizontally, so that the durability of the bushing of a cord as well as the bushing holding section is improved.

This object is attained with a structure for holding a bushing of a cord, with the features cited in claim 1.

Accordingly, the area of the surface regulating the movement of the bushing and the cord can be increased, thereby providing a reliable blocking of the movement of the bushing and the cord, not only in the forward and backward direction, but also in the vertical and the horizontal direction. The projecting plate portion engages the notch and biases the cord therein so that the cable is held in a stable condition.

It is preferred that a covering portion be arranged on either one of the upper case of the lower case on which the engagement holding section is not arranged, the covering portion covering the small recess and the large recess of the engagement holding section. It is also preferred that a recess be arranged in the covering portion, the recess being engageable with a part of the collarlike portion.

In the thus constructed structure for holding the bushing of a cord according to the invention, not only is the sleeve portion of the bushing engaged with the small recess of the engagement holding section arranged in the case, but also the collarlike portion of the bushing is engaged with the large recess of the engagement holding section. Therefore, the area of the surface regulating the movement of the bushing (the surface coming in contact with the bushing) can be increased to a great extent compared with that in the case of the conventional example, which in turn contributes to reliably blocking the movement of the bushing not only in the frontward and backward directions but also in the vertical and horizontal directions.

As a result, even when the cord is, e.g., pushed and pulled back and forth or oscillated vertically as well as horizontally, the bushing can be held stably without play, contributing to improving the durability of the bushing and the bushing holding section.

### BRIEF DESCRIPTION OF THE DRAWINGS

Fig. 1 is a perspective view showing an upper case and a lower case separated from each other, the upper case and the lower case constituting a structure for holding the bushing of a cord, which is an embodiment of the invention.
Fig. 2 is a perspective view showing the upper case of the embodiment with the upper case opened;
Fig. 3 is an enlarged sectional view showing the main portion of the lower case of the embodiment;
Fig. 4 is a sectional view showing the holding condition in the embodiment;
Fig. 5 is a diagram illustrative of another embodiment of the invention;
Fig. 6 is a plan view showing a bushing of a cord;
Fig. 7 is a side view showing the bushing of the cord;
Fig. 8 is a sectional view taken along a line A-A of Fig. 7; and
Fig. 9 is a diagram illustrative of a conventional structure for holding the bushing of a cord.

### DETAILED DESCRIPTION OF THE PREFERRED EMBODIMENTS

Embodiments of the invention will now be described with reference to the drawings.

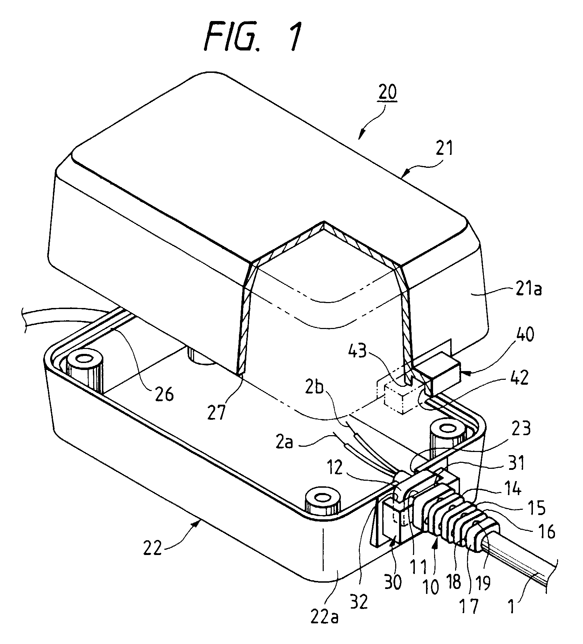

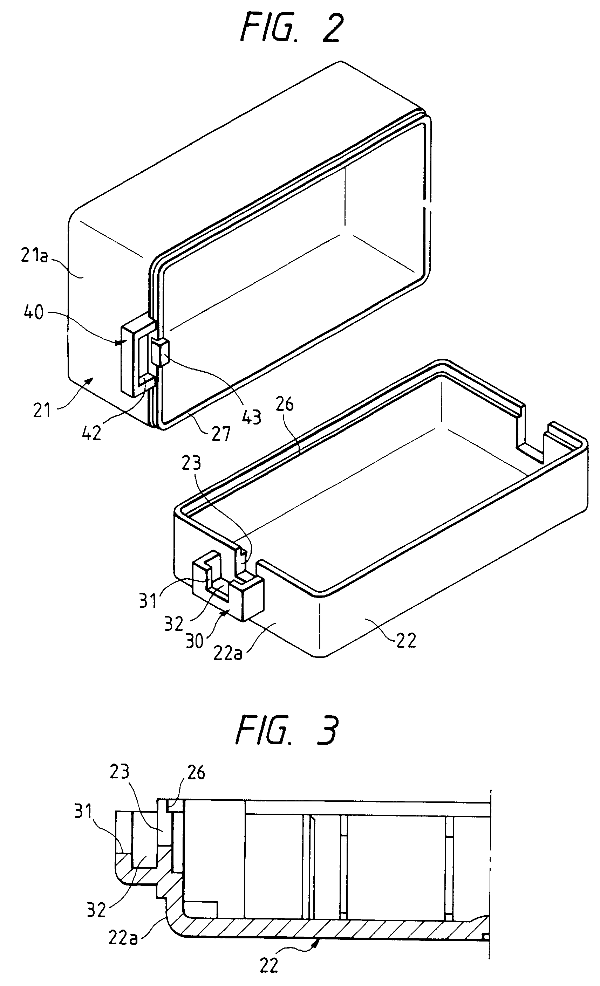

A structure for holding the bushing of a cord according to the invention is, as applied to an ac-dc converter shown in Fig. 1, designed to hold the same bushing 10 as has been shown in Figs. 6 to 8. That is, not only a notch 23 for inserting a cord 1 thereinto is arranged in one side portion 22a of a lower case 22 in a case 20 consisting of an upper case 21 and the lower case 22, but also an engagement holding section 30 having a small recess 31 and a large recess 32 (see Fig. 3 also) is arranged so as to enclose three peripheral sides excluding the upper side of the notch 23. The small recess 31 and the large recess 32 are rectangular in cross-section and engageable respectively with a rectangular sleeve portion 11 and a collarlike portion 12 of the bushing 10.

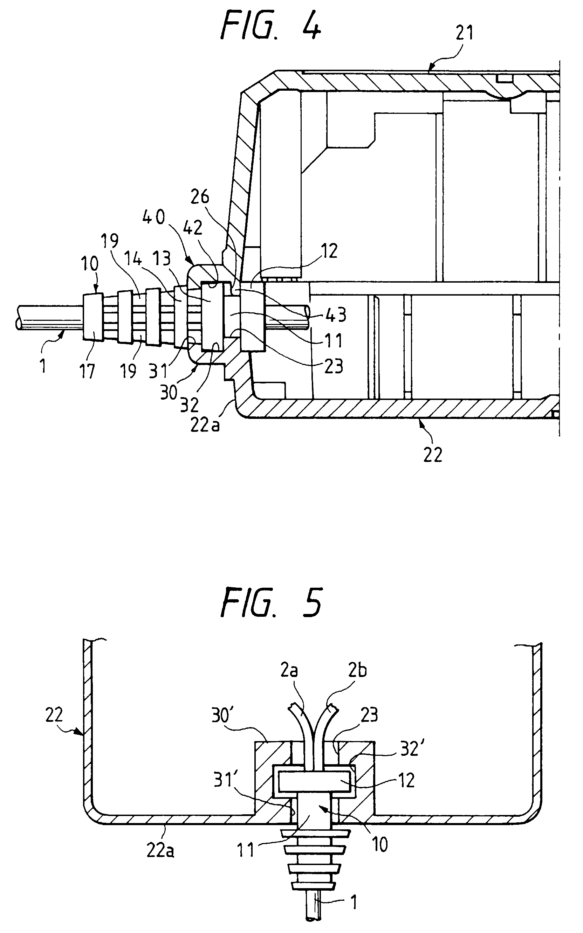

In this case, the depth of the small recess 31 is made equal to the height of the rectangular sleeve portion 11, so that the rectangular sleeve portion 11 is completely set into the small recess 31. On the other hand, since the height of the collarlike portion 12 is made larger than the depth of the large recess 32, part of the collarlike portion 12 is projected from the engagement holding section 30, so that the upper surface of the collarlike portion 12 is flush with the upper surface of the lower case 22 (see Fig. 4 also).

On the other hand, a covering portion 40 that is designed to cover the small recess 31 and the large recess 32 of the engagement holding section 30 is arranged on the outer peripheral side of a side portion 21a of the upper case 21 that has a projecting inner edge 27 engageable with a recessed inner edge 26 of the lower case 22. The covering portion 40 has not only a recess 42 engageable with a projecting portion of the collarlike portion 12 which is projecting from the large recess 32, but also a projecting plate portion 43 engageable with the notch 23 of the lower case 22.

The pushing holding structure has such construction as described above. When the upper case 21 is put over the lower case 22 so as to engage the projecting inner edge 27 of the upper case 21 with the recessed inner edge 26 of the lower case 22 under the condition that the rectangular sleeve portion 11 and the collarlike portion 12 of the bushing 10 is engaged with the small recess 31 and the large recess 32 of the engagement holding section 30 as shown in Fig. 1, not only the projecting portion of the collarlike portion 12 projecting from the large recess 32 engages with the recess 42 of the covering portion 40 arranged on the upper case 21, but also the portion of the covering portion 40 other than the recess 42 comes in intimate contact with the upper surface of the engagement holding section 30, and the cord 1 is biased with the projecting plate 43 of the upper case 21 engaged with the notch 23 of the lower case 22 as shown in Fig. 4.

As described above, this embodiment is characterized as not only engaging the rectangular sleeve portion 11 of the bushing 10 with the small recess 31 of the engagement holding section 30 arranged in the case 20, but also engaging the collarlike portion 12 of the bushing 10 with the large recess 32 of the engagement holding section 30. Therefore, the area of the surface regulating the movement of the bushing 10 (the surface coming in contact with the bushing) is increased to a great extent compared with that in the case of the conventional example. As a result, the movement of the bushing 10 is reliably blocked not only in the forward and backward directions but also in the vertical and horizontal directions.

Thus, even if the cord 1 is, e.g., pushed and pulled back and forth or oscillated vertically as well as horizontally, the bushing can be held stably without play, contributing to improving the durability of the bushing 10 and the case 20 that serves as the bushing 10 holding section.

Fig. 5 shows a structure for holding the bushing of a cord, which is another embodiment of the invention. This embodiment is characterized as not only arranging an engagement holding section 30' on inner peripheral sides of the lower case 22 so that the movement of the bushing against the case can be blocked, but also arranging a covering portion although not shown in the drawing and arranging a recess engageable with a part of the collarlike portion 12 in the covering portion. The engagement holding section 30' has a small recess 31' and a large recess 32' that are rectangular in cross-section and that are engageable with the rectangular sleeve portion 11 and the collarlike portion 12. The covering portion is designed to cover the small recess 31' and the large recess 32' of the engagement holding section 30'. Even when the engagement holding section is arranged on the inner side of the case as in this embodiment, advantages similar to those obtained by the aforementioned embodiment can be obtained. In addition, the forming of the engagement holding section inside the case allows the outer shape of the case to be formed without projections similarly to the conventional example.

As is apparent from the foregoing description, the structure for holding the bushing of a cord according to the invention can hold the bushing stably without play even if the cord is, e.g., pushed and pulled back and forth or oscillated vertically as well as horizontally. This brings about the advantage of significantly improving the durability of the bushing as well as the bushing holding section.

## Claims

1. A structure for holding a bushing (10) of a cord (1), the bushing (10) being arranged close to an end of the cord (1) and having a sleeve portion (11) and a collarlike portion (12) projecting from an outer periphery of a rear end of the sleeve portion (11), the structure comprising:
- a case (21, 22) splitable into an upper case and a lower case, said cord end being inserted in said case,
- and blocking means for blocking a movement of said bushing (10) with respect to said case, said blocking means comprising:
- an engagement holding section (30) being arranged either on the upper case (21) or the lower case (22) and having a small recess (31) engageable with the sleeve portion (11), a large recess (32) adjacent to the small recess and engageable with the collarlike portion (12), and a notch for inserting the cord thereinto arranged at a side of the large recess (32) opposite the small recess (31)
**characterized in that**
a projecting plate portion (43) for engaging the notch (23) and biasing the cord (1) is arranged at either one the upper case (21) or the lower case (22) on which the engagement holding section (30) is not arranged.

2. The structure as claimed in claim 1,
**characterized in that,**
said blocking means is arranged on the one of an outer peripheral side and an inner peripheral side of at least one of the upper and the lower case.

3. The structure according to claim 1 or 2,
**characterized in that,**
a covering portion (40) is arranged on either one of the upper case (21) or the lower case (22) on which the engagement holding section is not arranged, the covering portion (40) covering the small recess (31) and the large recess (32) of the engagement holding section (30).

4. The structure according to claim 3,
**characterized in that,**
a recess is arranged in the covering portion (40) the recess (42) being engageable with a part of the collarlike portion (12).

5. The structure according to claims 3 or 4,
**characterized in that,**
the covering portion (40) comprises the projecting plate portion (43).

## Patentansprüche

1. Vorrichtung zum Halten der Durchführung (10) eines Kabels (1), wobei die Durchführung (10) am Ende des Kabels (1) angeordnet ist und einen Hülsenabschnitt (11) sowie einen am hinteren Ende des Hülsenabschnittes (11) nach außen ragenden kragenförmigen Abschnitt (12) aufweist, wobei die Vorrichtung umfaßt:
- ein Gehäuse (21, 22) welches in ein oberes und ein unteres Gehäuseteil zerlegbar ist, wobei das Kabelende in das Gehäuse eingeführt ist,
- und eine Blockiereinrichtung zum Blockieren der Bewegung der Durchführung (10) zum Gehäuse, wobei die Blockiereinrichtung umfaßt:
- einen Eingriffshalteteil (30) entweder am oberen Gehäuseteil (21) oder am unteren Gehäuseteil (22) mit einer kleinen Aussparung (31), die mit dem Hülsenabschnitt (11) in Eingriff kommen kann, einer großen Aussparung (32) neben der kleinen Aussparung, die mit dem kragenförmigen Abschnitt (12) in Eingriff kommen kann, und einem Schlitz zum Einführen des Kabels auf jener Seite der großen Aussparung (32), die der kleinen Aussparung (31) gegenüberliegt,
**dadurch gekennzeichnet, daß**
ein hervorstehender Plattenabschnitt (43) für den Eingriff mit dem Schlitz (23) und für eine Kraftbelastung des Kabels (1) an dem oberen Gehäuseteil (21) oder dem unteren Gehäuseteil (22) vorgesehen ist, an dem sich das Eingriffshalteteil (30) nicht befindet.

2. Vorrichtung nach Anspruch 1, **dadurch gekennzeichnet, daß**
die Blockiereinrichtung entweder an einer Außenseite oder einer Innenseite von zumindest dem oberen oder dem unteren Gehäuseteil angebracht ist.

3. Vorrichtung nach Anspruch 1 oder 2, **dadurch gekennzeichnet, daß**
ein Abdeckteil (40) entweder an dem oberen Gehäuseteil (21) oder dem unteren Gehäuseteil (22) vorgesehen ist, auf welchem das Eingriffshalteteil nicht angeordnet ist, wobei das Abdeckteil (40) die kleine Aussparung (31) und die große Aussparung (32) des Eingriffshalteteils (30) bedeckt.

4. Vorrichtung nach Anspruch 3, **dadurch gekennzeichnet, daß**
eine Aussparung in dem Abdeckteil (40) angeordnet ist, wobei die Aussparung (42) mit einem Teil des kragenförmigen Abschnitts (12) ineinandergreifen kann.

5. Vorrichtung nach Anspruch 3 oder 4, **dadurch gekennzeichnet, daß**
das Abdeckteil (40) den hervorstehenden Plattenabschnitt (43) umfaßt.

## Revendications

1. Structure destinée à retenir un manchon d'entrée (10) d'un cordon (1), le manchon d'entrée (10) étant prévu près d'une extrémité du cordon (1) et ayant une partie de gaine (11) et une partie en forme de collier (12) qui dépasse d'une périphérie externe d'une extrémité arrière de la partie de gaine (11), la structure comportant:
- un boîtier (21, 22) divisible en un boîtier supérieur et un boîtier inférieur, ladite extrémité de cordon étant insérée dans ledit boîtier,
- et des moyens de blocage destinés à bloquer un mouvement dudit manchon d'entrée (10) par rapport audit boîtier, lesdits moyens de blocage comportant :
- une section de retenue d'engagement (30) qui est prévue sur le boîtier supérieur (21) ou bien sur le boîtier inférieur (22) et ayant un petit renfoncement (31) pouvant être engagé avec la partie de gaine (11), un grand renfoncement (32) adjacent au petit renfoncement et pouvant être engagé avec la partie en forme de collier (12), et une encoche pour y insérer le cordon disposée sur un côté du grand renfoncement (32) à l'opposé du petit renfoncement (31),
caractérisée en ce que
une partie de plaque saillante (43) destinée à engager l'encoche (23) et à rappeler le cordon (1) est prévue sur le boîtier supérieur (21) ou bien sur le boîtier inférieur (22) sur lequel la section de maintien d'engagement (30) n'est pas prévue.

2. Structure selon la revendication 1,
caractérisée en ce que,
lesdits moyens de blocage sont prévus sur un côté périphérique externe ou bien un côté périphérique interne d'au moins le boîtier supérieur ou le boîtier inférieur.

3. Structure selon la revendication 1 ou 2,
caractérisée en ce que,
une partie de recouvrement (40) est prévue sur le boîtier supérieur (21) ou bien le boîtier inférieur (22) sur lequel la section de maintien d'engagement n'est pas prévue, la partie de recouvrement (40) recouvrant le petit renfoncement (31) et le grand renfoncement (32) de la section de maintien d'engagement (30).

4. Structure selon la revendication 3,
caractérisée en ce que,
un renfoncement est prévu dans la partie de recouvrement (40), le renfoncement (42) pouvant être engagé avec une partie de la partie en forme de collier (12).

5. Structure selon la revendication 3 ou 4,
caractérisée en ce que,
la partie de recouvrement (40) comporte la partie de plaque saillante (43).
